# EUROPEAN PATENT APPLICATION

(11) **EP 2 657 802 A2**
(43) Date of publication of application: **30.10.2013**
(21) Application number: 13165070.7
(22) Date of filing: 24.04.2013
(51) Int. Cl.: G05B 23/02

(54) **System and method for configuration and management of power plant assets**

(30) Priority: 24.04.2012 US 201213454350
(71) Applicant: General Electric Company, Schenectady, New York 12345 (US)
(72) Inventor: Conroy, Patrick Joseph, Salem, VA 24153 (US); Damodar, Dhanashree Sadanand, 500081 Hyderabad (IN); Banerjee, Abhik, 500081 Hyderabad (IN); Ojha, Pradyumna, 500081 Hyderabad (IN); Bolla, Veera Paparao, 500081 Hyderabad (IN); Goli, Balajose, 500081 Hyderabad (IN); Romanik, Christina Ann, Salem, VA 24153 (US)
(74) Representative: Picker, Madeline Margaret

(57) **Abstract**

Systems and methods for generating and maintaining configuration and management of power plant assets are described herein. A list of possible plant assets are received from a plant information model 324. One or more hardware assets describing a configuration of a particular power plant are selected, such as turbines, pumps, control interfaces, and so forth. Hierarchical relationships between at least a portion of the selected assets are defined. Asset configuration data 100 is generated based at least in part on the selection and the defined relationships.

## Description

Embodiments of the invention relate generally to management of physical plant assets in or associated with a power plant, and more particularly, to systems and methods for managing and configuring those assets.

A power plant comprises a variety of different physical plant assets or components for operation. Maintaining and operating a power plant involves coordinating operation of these components.

A power plant ("plant") or other industrial facility may include a wide variety of physical plant assets or components which operate together to provide for operation. Described herein are systems and methods for generating and/or maintaining asset configuration data for a power plant. The technical effect of this invention is to aid in the management and operation of power plants or other industrial facilities. This asset configuration data may be used to monitor and/or operate the plant or assets therein.

The asset configuration data describes the plant assets and their relationships to one another. These relationships may be logical relationships, physical, or a combination thereof. The asset configuration data may include operating attributes or parameters, such as set points and/or measurement values for individual assets.

The asset configuration data, once generated, may be accessed and used to aid in the monitoring of the plant assets, or to make changes to the operation of one or more plant assets. In one implementation, a user may generate the asset configuration data with the aid of an asset management module executing on one or more processors. Other implementations, systems, methods, apparatus, aspects, and features of the invention will become apparent to those skilled in the art from the following detailed description, the accompanying drawings, and the appended claims.

The detailed description is set forth with reference to the accompanying drawings, which are not necessarily drawn to scale. The use of the same reference numbers in different figures indicates similar or identical items.
FIG. 1 is a diagram of a system for managing asset configuration data of a power plant according to an embodiment of the invention.
FIG. 2 is a block diagram of permitted relationships between assets in the asset configuration data according to an embodiment of the invention.
FIG. 3 is a block diagram of an asset configuration server according to an embodiment of the invention.
FIG. 4 is a flow diagram of a process for generating or maintaining an asset configuration data according to an embodiment of the invention.

Illustrative embodiments of the invention will now be described more fully hereinafter with reference to the accompanying drawings, in which some, but not all embodiments of the invention are shown. The invention may be embodied in many different forms and should not be construed as limited to the embodiments set forth herein; rather, these embodiments are provided so that this disclosure will satisfy applicable legal requirements. As noted above, like numbers refer to like elements throughout.

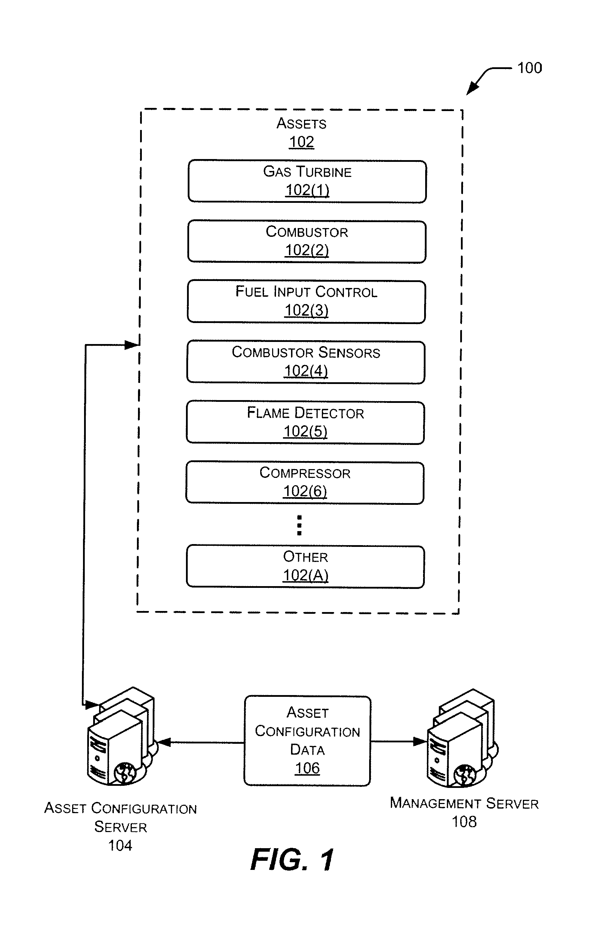

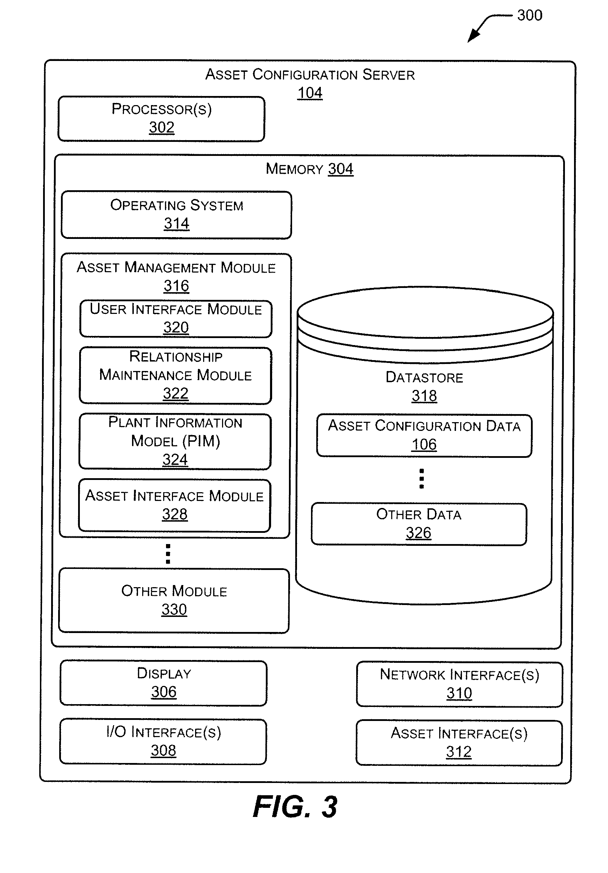

FIG. 1 is a diagram of a system 100 for managing asset configuration data of a power plant or other industrial facility according to an embodiment of the invention. A power plant may be configured to generate electrical power, thermal power, mechanical power, or a combination thereof. The power plant comprises a number of components or assets 102. These assets 102 may be hardware or other devices involved in operation of the plant. In some implementations, all the assets of the power plant are represented by an equivalent logical structure using a software model known as Plant Information Model ("PIM"). The PIM is discussed below in more detail with regard to FIG. 3. For the sake of illustration, and not by way of limitation, the assets 102 shown here may include gas turbines 102(1), combustors 102(2), fuel input controls 102(3), combustor sensors 102(4), flame detectors 102(5), compressors 102(6), and so forth.

An asset configuration server 104 is configured to generate a customized hierarchical representation of the power plant using the PIM. This hierarchical representation may be based on logical relationships, physical relationship, or a combination thereof. Logical relationships define operation of one component relative to another. For example, changing state of a fuel control valve will affect another downstream component such as a combustor consuming the fuel. Physical relationships are indicative of a coupling between two components. For example, a physical relationship may be defined by a shaft coupling a gas turbine to an electric generator. Hierarchical relationships allow assets to be categorized relative to one another such that interrelated components (or indicators associated therewith) are grouped or presented together while non-interrelated components (or indicators associated therewith) are not.

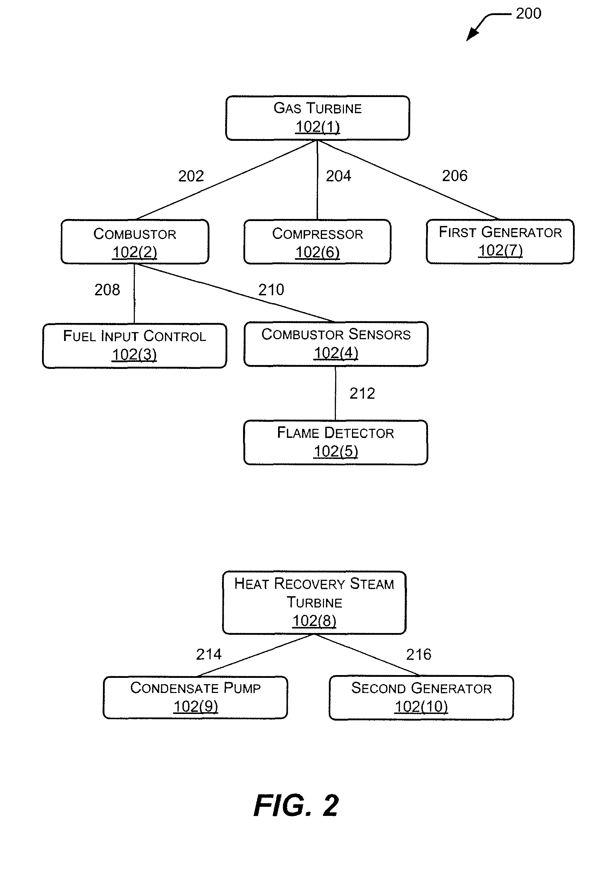

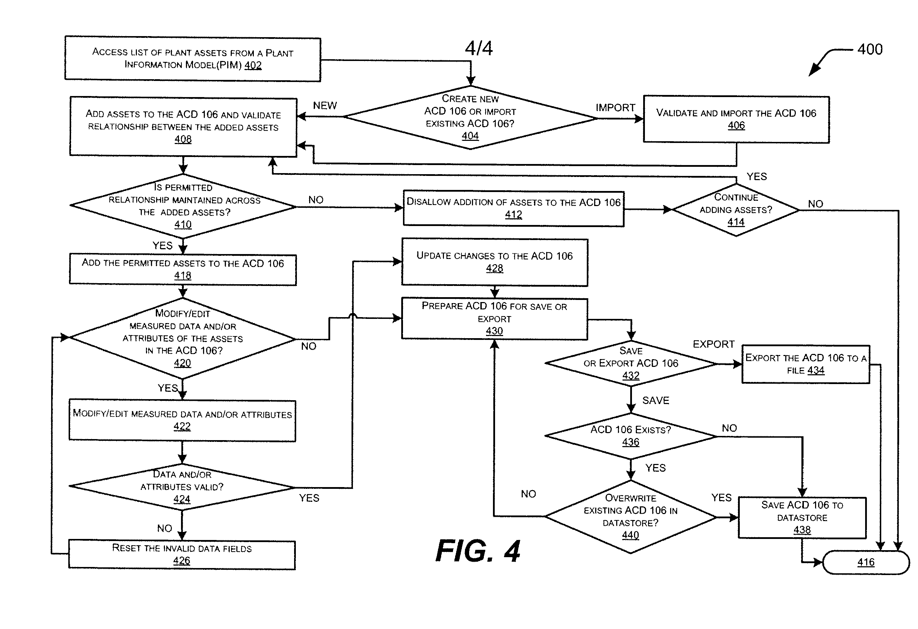

The asset configuration server 104 is configured to allow a user to select one or more assets 102 describing a configuration or representation of the power plant, define relationships between those selected assets, and generate asset configuration data 106 based at least in part on the selection and the defined relationships. The asset configuration server 104 helps to enforce the hierarchical relationships in the asset configuration data 106. For example, a user may add a fuel input control as being subordinate to a combustor which consumes the fuel, but addition of an electrical generator as subordinate to the combustor would be impermissible. Hierarchical relationships are described below in more detail with regard to FIG. 2. The asset configuration server 104 and operation thereof to generate and/or maintain the asset configuration data 106 is described below with regard to FIGS. 3 and 4.

A management server 108 may be configured to persist the asset configuration data 106. The management server 108 may also enable the asset configuration server 104 to make changes to the existing asset configuration data 106 that have been persisted on the management server 108 or create a new asset configuration data 106 and save it to the management server 108 for further monitoring/configuring the plant assets.

The asset configuration server 104 and the management server 108 may be configured to operate when connected or when disconnected with one another. In one implementation, a connection may be established between the asset configuration server 104 and the management server 108. At least a portion of the asset configuration data 106 may be transferred via the connection between the devices. For example, the asset configuration data 106 may be sent from the asset configuration server 104 to the management server 108 via a network connection. When the transfer is complete, the connection may be de-established or disconnected. The management server 108 may use the asset configuration data 106 persisted thereon to operated. Meanwhile, the users may continue to access the asset configuration server 104 to modify the asset configuration data 106 and generate a modified asset configuration data 106. This modified asset configuration data 106 may be stored, exported, or transferred to the management server 108. For the transfer, a connection between the asset configuration server 104 and the management server 108 is re-established. At least a portion of the modified asset configuration data 106 may be provided to the management server 108 via the connection. The management server 108 may now persist the modified asset configuration data 106.

In some implementations, the asset configuration server 104 and the management server 108 may be combined into a single physical or virtual server. For example, a single server may provide both functions.

FIG. 2 is a block diagram 200 of permitted relationships between assets in the asset configuration data according to an embodiment of the invention. The permitted relationships depicted here are for illustration and not by way of limitation. Permitted or permissible relationships may be pre-defined. Two or more assets 102, such as those selected by the user from the plant information model 324 may be related by placing the selected one or more assets in a pre-defined hierarchy relative to one another.

In one implementation, a human engineer may define a set of relationships or rules describing how assets 102 may relate to one another. In another implementation, a machine learning system or other automated device may define at least a portion of the permissible or impermissible relationships. A relationship may be determined as being permissible or impermissible based at least in part upon comparing a proposed relationship with a pre-defined relationship. The pre-defined relationships may comprise explicitly permitted relationships, explicitly impermissible relationships, or a combination thereof.

The block diagram 200 depicts the gas turbine 102(1) asset 102 in the power plant. The gas turbine 102(1) has several logically dependent subordinate or child assets 102. These include the combustor 102(2), the compressor 102(6), a first generator 102(7), and so forth. These assets 102 depend from the gas turbine 102(1) in the hierarchy by permissible relationships 202, 204, and 206, respectively.

Subordinate to the combustor 102(2) are other assets including the fuel input control 102(3), and the combustor sensors 102(4) as linked by relationships 208 and 210, respectively. The flame detector 102(5) is subordinate to the combustor sensor 102(4) as shown by permissible relationship 212. These relationships 202-212 describe a portion of the logical interrelationships between the assets 102 in the plant associated with the gas turbine 102(1). By maintaining the hierarchy, users may more easily locate particular assets 102, ascertain consequences of making changes to a particular asset 102, and so forth.

Another set of assets 102 in the plant may include a heat recovery steam turbine 102(8). Subordinate to the steam turbine 102(8) may be a condensate pump 102(9) and a second generator 102(10), described by relationships 214 and 216, respectively. The condensate pump 102(9) is permissibly dependent from or subordinates to the steam turbine 102(8) because it is logically associated therewith. In contrast, an attempted relationship between the condensate pump 102(9) and the combustor sensors 102(4) would be deemed impermissible. Should the user attempt to relate these two components while building the asset configuration data 106 describing a particular plant, such a relationship would be disallowed by the asset configuration server 104.

FIG. 3 is a block diagram 300 of an asset configuration server according to an embodiment of the invention. The asset configuration server 104 may comprise one or more processors 302, one or more memories 304, one or more displays 306 may be present, one or more input/output ("I/O") interfaces 308, and one or more network interfaces 310. In some implementations an asset interface 312 may be provided as well.

The processor 302 may comprise one or more cores and is configured to access and execute at least in part instructions stored in the one or more memories 304. The one or more memories 304 comprise one or more computer-readable storage media ("CRSM"). The one or more memories 304 may include, but are not limited to, random access memory ("RAM"), flash RAM, magnetic media, optical media, and so forth. The one or more memories 304 may be volatile in that information is retained while providing power or non-volatile in that information is retained without providing power.

In some implementations the asset configuration server 104 may be accessed by a user device such as a workstation. The one or more input/output interfaces 308 allow for coupling devices such as serial ports, keyboards, external memory, and so forth to the asset configuration server 104.

The one or more network interfaces 310 provide for the transfer of data between the asset configuration server 104 and another device directly such as in a peer-to-peer fashion, via a network, or both. The network interfaces 310 may include, but are not limited to, wired local area networks ("LANs"), wireless local area networks ("WLANs"), wireless wide area network ("WWANs"), and so forth.

The asset configuration server 104 may also comprise, or be coupled to, one or more asset interfaces 312. These one or more asset interfaces 312 are configured to provide communication with one or more of the assets 102 or control systems, monitoring systems, and so forth associated therewith. In one implementation the asset interface 312 may comprise equipment configured to couple to an industrial communication network such as Fieldbus as specified by International Electrotechnical Commission ("IEC") specifications IEC 61158 and 61784. In some implementations this coupling may be configured to allow retrieval of data from at least a portion of the one or more plant assets 102. In other implementations the coupling may be configured to provide for configuration changes to at least a portion of the one or more plant assets 102. The one or more memories 304 may store code or program instructions for execution by the processor 302 to perform certain actions or functions. These instructions may include an operating system 314 configured to manage hardware resources such as the I/O interfaces 308 and provide various services to applications executing on the processor 302.

The one or more memories 304 may store code or program instructions for execution by the processor 302 to perform certain actions or functions. These instructions may include an operating system 314 configured to manage hardware resources such as the I/O interfaces 308 and provide various services to applications executing on the processor 302.

An asset management module 316 is configured to generate and maintain the asset configuration data 106. The asset management module 316 accepts inputs and enforces rules about plant configuration, such as expressed in the relationships between the assets 102 as described above with regards to FIG. 2. In one implementation, the asset management module 316 may receive a user selection of a first plant asset 102, receive a user selection of a second plant asset 102, and receive a user input designating an association or relationship between the first plant asset 102 and the second plant asset 102.

The asset management module 316 may be coupled to a datastore 318 resident in the one or more memories 304. The datastore 318 may comprise one or more data structures such as databases, linked lists, arrays, files, and so forth. In one implementation the datastore 318 may comprise a relational database.

The asset management module 316 may comprise a user interface module 320. The user interface module 320 is configured to provide a user interface to the user. The user interface module 320 may be configured to provide the user interface via a web browser, dedicated application, or combination thereof. The user interface module 320 is configured to present data to the user and receive user inputs.

A relationship maintenance module 322 in the asset management module 316 maintains relationships between the assets 102. The relationship maintenance module 322 may be configured to maintain permissible relationships, impermissible relationships, or both. As described above, these relationships may be logical relationships, physical, or a combination thereof. The relationships may be pre-defined, or generated automatically. In one implementation, the relationship maintenance module 322 may be configured to use the user interface module 320 to present a plurality of assets 102 and receive user input specifying valid relationships between the assets 102.

The plant information model ("PIM") 324 comprises a list or set of assets 102 which may be deployed in the plant. In some implementations, the PIM 324 may be part of the asset management module 316. The plant information model 324 may contain details about the assets 102. The details may comprise the capacity, characteristics, associated components, and so forth. The plant information model 324 may also contain the relationships between assets 102, such as specified by the relationship maintenance module 322.

The asset configuration data 106, as described above, comprises information about a particular plant. The asset configuration data 106 may include at least a portion of the assets 102 in the plant and their relationship to one another. The asset configuration data 106 may also include attributes or parameters associated with the assets 102 therein. For example, a temperature set point for a combustor, or flow range available for a particular valve.

Other data 326 may also be stored in the datastore 318. For example, particular combinations of operating attributes or parameters associated with different operating regimes may be stored.

An asset interface module 328 of the asset management module 320 is configured to access the asset interfaces 312 where available. The asset interface module 328 may be used to retrieved existing control attributes or conditions stored in the assets 102. For example, the asset management module 316 may discover devices coupled to the asset interface 312 and pre-populate their current values into the asset configuration data 106.

The modules described herein may be executed as standalone applications, as services accessible to another device, or as a combination thereof. In one implementation the datastore 318 may reside in a memory of the management server 108. The asset management module 316 may use the asset interface module 328 in combination with the asset interface 312 or the network interface 310 to access the asset configuration data 106 that will be persisted into the datastore in the management server 108.

FIG. 4 is a flow diagram 400 of a process for generating or maintaining an asset configuration data according to an embodiment of the invention. In some implementations this process may be implemented by the asset management module 316 as described above.

Block 402 accesses a list of plant assets 102 from a plant information model 324. In some implementations the user interface module 320 may be configured to receive an entry of a plant asset 102 and incorporate the plant asset 102 into the list, into the access configuration data ("ACD") 106, or both.

Block 404 determines when the user selects to create a new configuration or import an existing set of ACD 106. When the user selects to import existing ACD 106, the process proceeds to block 406. Block 406 validates the ACD 106 and imports the data into the datastore 318. This validation may comprise looking for impermissible relationships, checking for unknown or unspecified assets 102, and so forth. The process may then proceed to block 406.

When block 404 determines a new ACD 106 is to be created, or the import of block 406 has completed, block 408 operates. Block 408 allows the user or another system to add assets 102 to the ACD 106, and validates the relationships between those assets.

Block 410 inspects to determine if permitted relationships are maintained across the added assets 410. For example, the relationships added by the user may be compared against pre-defined relationships stored in the plant information model 324. In one implementation, the determination may comprise comparing a proposed relationship with a pre-defined relationship.

When block 410 finds that a relationship is impermissible, the process proceeds to block 412. Block 412 disallows addition of the assets 102 to the ACD 106 and proceeds to block 414. Block 414 determines whether to continue adding assets or not. When not, the process proceeds to block 416. Block 416 may call another module or operation. When block 414 determines that addition of assets 102 will continue, the process proceeds back to block 408.

Returning to block 410, when assets 102 associated with a permissible relationship are added, block 418 adds the permitted assets 102 to the ACD 106. Block 420 determines whether the user wishes to modify or edit measured data and/or attributes of the assets 102 in the ACD 106. For example, the user may choose to enter various set points into the operation of the gas turbine 102(1). When yes, the process proceeds to block 422 where the user may proceed to modify/edit the measured data and/or attributes. The process proceeds to block 424 which determines whether the data and/or attributes associated with one or more assets are valid. Valid attributes are those which are within a specified range, have a pre-determined data type, do not exceed specified operating limits, and so forth. When invalid, the process proceeds to block 426 which resets the invalid data fields, and proceeds back to block 420.

When the data and/or attributes are valid as determined by block 424, the process proceeds to block 428. Block 428 updates changes to the ACD 106 to reflect the valid data and/or attributes. The process proceeds to block 430 which prepares the ACD 106 for save in the datastore 318 or export to another memory or device. This preparation may comprise designating a filename, removing redundant data, compressing the file, setting a file format, and so forth.

The process then continues to block 432 which determines whether the user will save or export the ACD 106. For example, the user interface module 320 may be used to present a dialog box or other prompt to the user and receive the user's input. When export is determined, the process proceeds to 434 and exports the ACD 106 to a file. The process may then proceed to 416.

Returning to block 432, when save is selected, the process proceeds to block 436 which determines whether the ACD 106 previously exists. This determination may be facilitated by the operating system 314. For example, the ACD 106 may be determined to exist when the current filename matches a filename existing already in the memory 304. When the ACD 106 does not previously exist, the process proceeds to block 438 which saves the ACD 106 to the datastore 318. The process may then proceed to 416.

Returning to 436, when the ACD 106 is determined to exist, the process proceeds to block 440. Block 440 determines whether to overwrite an existing ACD 106 in the datastore 318 with the current version of the ACD 106. When overwrite is selected or permitted, the process proceeds to block 438. When overwrite is not selected or permitted, the process may return to block 430.

Returning to block 420, when the user is not modifying/editing the measured data and/or attributes, the process proceeds to block 430.

Illustrative systems and methods are described above. Some or all of these systems and methods may, but need not, be implemented at least partially by an architecture such as those shown in FIGS. 1-4. It should be understood that certain acts in the methods need not be performed in the order described, may be rearranged or modified, and/or may be omitted entirely, depending on the circumstances. Also, any of the acts described above with respect to any method may be implemented by any number of processors or other computing devices based on instructions stored on one or more computer-readable storage media.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A system, comprising:
at least one memory (304) storing computer-executable instructions; and
at least one processor (302) configured to access the at least one memory and execute the computer-executable instructions configured to:
access a plant information model (324) comprising one or more plant assets (102);
receive a selection of one or more plant assets (102) from the plant information model (324) to describe a power plant;
relate at least a portion of the one or more plant assets (102) to one another;
enforce one or more pre-defined relationships between the related one or more plant assets (102); and
generate asset configuration data (106) based at least in part on a plurality of the selected plant assets (102) and the enforced one or more pre-defined relationships.

2. The system of claim 1, further comprising one or more plant asset interfaces (312) configured to communicate with one or more of the plant assets (102), and the instructions further configured to, based at least in part on the asset configuration data (106), retrieve data from at least a portion of the one or more plant assets via the one or more plant asset interfaces.

3. The system of claim 1 or claim 2, further comprising one or more plant asset interfaces (312) configured to communicate with one or more of the plant assets (102), and the instructions further configured to, based at least in part on the asset configuration data (106), configure at least a portion of the one or more plant assets via the one or more plant asset interface.

4. The system of claim 1, 2 or 3, the instructions further configured to receive an entry of a plant asset (102) and incorporate the plant asset into the list.

5. The system of any preceding claim, the instructions further configured to store the asset configuration data (106) in the at least one memory.

6. The system of any preceding claim, the one or more plant assets (102) comprising hardware used in operation of a power plant configured to provide electrical power, thermal power, or both.

7. The system of any preceding claim, the relating comprising instructions configured to:
receive a user selection of a first plant asset (102);
receive a user selection of a second plant asset (102); and
receive a user input designating an association between the first plant asset and the second plant asset.

8. The system of any preceding claim, the relating comprising placing the selected one or more assets (102) in a pre-defined hierarchy relative to one another.

9. A method, comprising:
receiving a selection of one or more assets describing a configuration of a power plant;
defining relationships between at least a portion of the one or more selected assets; and
generating asset configuration data based at least in part on the selection and the defined relationships.

10. The method of claim 9, further comprising validating one or more operating attributes associated with the one or more assets.

11. The method of claim 9 or claim 10, the defining relationships further comprising comparing a proposed relationship with a pre-defined relationship.

12. The method of claim 9, 10 or 11, the receiving the selection further comprising accessing a list of one or more plant assets from a plant information model stored in one or more computer memories and presenting at least a portion of that list with a user interface.

13. The method of any one of claims 9 to 12, further comprising enforcing integrity in the defining relationships by comparing a proposed relationship between a plurality of components with a pre-defined relationship between the plurality of components.

14. The method of any one of claims 9 to 13, further comprising at least one of:
storing the asset configuration data in a datastore resident on the one or more computer-readable media;
receiving user modification of one or more portions of the asset configuration data; and
defining values of one or more attributes associated with the one or more components for incorporation into the asset configuration data.

15. One or more computer-readable media storing computer-executable instructions that, when executed by at least one processor, configure the at least one processor to perform the method of any one of claims 9 to 14.
